# EUROPÄISCHE PATENTSCHRIFT

(11) **EP 3 390 212 B1**
(45) Veröffentlichungstag und Bekanntmachung des Hinweises auf die Patenterteilung: **16.02.2022**
(21) Anmeldenummer: 16808625.4
(22) Anmeldetag: 07.12.2016
(51) Int. Cl.: B62K 21/12, B62K 21/26, B62K 21/14, B62J 17/02

(54) **FAHRRADLENKER**
BICYCLE HANDLEBAR
GUIDON DE BICYCLETTE

(30) Priorität: 18.12.2015 DE 202015008698 U
(43) Veröffentlichungstag der Anmeldung: 24.10.2018
(73) Patentinhaber: Canyon Bicycles GmbH, 56073 Koblenz (DE)
(72) Erfinder: JADCZAK, Sebastian, 56068 Koblenz (DE); FORST, Alexander, 56068 Koblenz (DE); HOFER, Sebastian, 20459 Hamburg (DE)
(74) Vertreter: dompatent von Kreisler Selting Werner - Partnerschaft von Patent- und Rechtsanwälten mbB
(86) Internationale Anmeldenummer: PCT/EP2016/080110
(87) Internationale Veröffentlichungsnummer: WO 2017/102508

(56) Entgegenhaltungen:
- WO-A1-92/18374
- CN-U- 204 021 156
- JP-A- H02 114 079
- US-A- 588 166
- US-A- 5 154 094
- US-A1- 2002 078 788
- US-A1- 2004 231 451
- US-A1- 2005 000 313
- US-A1- 2006 090 589

## Beschreibung

Die Erfindung betrifft einen Fahrradlenker, insbesondere einen Rennradlenker.

Übliche Fahrradlenker für Rennräder weisen einen Querträger auf, der mit dem Lenkervorbau verbunden oder einstückig ausgebildet ist. Der Lenkervorbau ist mit dem Gabelschaft verbunden. An den beiden äußeren Seiten des Querträgers sind untere Griffelemente angeordnet, die in Seitenansicht bogenförmig und insbesondere halbkreisförmig ausgebildet sind. Derartige herkömmliche Rennradlenker können insbesondere in drei unterschiedlichen Griffpositionen gehalten werden. Einerseits ist ein Greifen an den unteren Griffelementen und andererseits am Querträger möglich. Zudem wird der Lenker in der sogenannten Shifter-Position in vorwärts orientierter Handposition an dem 90° nach vorne gebogenen Teil des Lenkers gehalten. Ein Halten des Rennrandlenkers an den unteren Griffelementen erfolgt insbesondere im Sprint. Hierbei treten hohe Kräfte und Momente auf. Diese müssen von den Griffelementen auf den Querträger und von diesem auf den Vorbau in den Rahmen übertragen werden. Insofern besteht die Forderung, dass die Griffelemente eine hohe Steifigkeit aufweisen. Dem gegenüber wird der Rennradlenker am Querträger während entspannteren Fahrsituationen gehalten. In diesen wäre eine gewisse Elastizität des Lenkers wünschenswert, da hier durch die Ermüdung des Fahrers, insbesondere der Hand und der Arme, verringert würde. Dies widerspricht jedoch der geforderten Steifigkeit des Querträgers zur Übertragung von Kräften und Momenten von den unteren Griffelementen.

Ein Fahrradlenker mit den Merkmalen des Oberbegriffs des Anspruchs 1 ist aus US 5 154 094 A bekannt.

Aufgabe der Erfindung ist es, einen Fahrradlenker insbesondere als Ersatz der konventionellen Lenkerform für Rennräder zu schaffen, mit dem der Komfort verbessert wird bzw. das Auftreten von Ermüdungserscheinungen verringert ist.

Die Lösung der Aufgabe erfolgt erfindungsgemäß durch einen Fahrradlenker mit den Merkmalen des Anspruchs 1. Weitere erfindungsgemäße Ausgestaltungen und Vorteile gehen aus den Unteransprüchen hervor. J Z

Der erfindungsgemäße Fahrradlenker weist einen Querträger auf, der mit einem Lenkervorbau verbunden ist, wobei die Verbindung auch einstückig ausgebildet sein kann. Ferner sind mit dem Querträger zwei jeweils am Querträger seitlich angeordnete untere Griffelemente verbunden. Diese sind vorzugsweise einstückig mit dem Querträger ausgebildet. Die unteren Griffelemente sind erfindungsgemäß hierbei in Seitenansicht bogenförmig ausgebildet.

Durch den verglichen mit herkömmlichen Rennradlenkern vorzugsweise tieferen Anbindungspunkt der seitlichen Griffelemente am Querträger ist erfindungsgemäß die Anbindung zweier zusätzlicher oberer Griffelemente mit dem Querträger möglich. Die Verbindung erfolgt hierbei vorzugsweise seitlich außen an dem Querträger. Die Verbindung könnte jedoch auch an einem inneren oder mittleren Bereich des Querträgers erfolgen. Vorzugsweise sind die oberen Griffelemente einstückig mit dem Querträger ausgebildet. Durch das erfindungsgemäße Vorsehen zusätzlicher oberer Griffelemente ist es möglich diese mit einer höheren Elastizität auszubilden. Dies ist möglich, da auch in den unteren Griffelementen, die insbesondere bei einem Sprint oder dergleichen genutzt werden, hohe Kräfte und Momente unmittelbar an den Querträger übertragen werden können, wobei die oberen Griffelemente nicht Bestandteil der entsprechenden Kraftübertragung sind. Die Kraftübertragung von den unteren Griffelementen in den Vorbau bzw. den Rahmen erfolgt somit unabhängig von der Ausgestaltung der oberen Griffelemente. Es ist daher möglich, die oberen Griffelemente ergonomisch anzupassen und insbesondere eine gewünschte Elastizität und hierdurch hervorgerufene Dämpfung zu realisieren. Besonders bevorzugt ist es, dass die Elastizität der oberen Griffelemente größer ist als die Elastizität der unteren Griffelemente. Hierdurch kann der Fahrkomfort deutlich verbessert werden.

Vorzugsweise sind die unteren Griffelemente somit im montierten Zustand des Rennradlenkers unterhalb des Lenkradvorbaus und/oder die oberen Griffelemente im montierten Zustand des Lenkers oberhalb des Lenkervorbaus angeordnet.

In bevorzugter Ausführungsform sind die oberen Griffelemente im äußeren Bereich mit dem Querträger verbunden. Es ist bevorzugt, dass die oberen beiden Griffelemente nach innen in Richtung des Lenkervorbaus ragen.

Erfindungsgemäß sind die oberen Griffelemente im Wesentlichen parallel zum Querträger angeordnet.

Insbesondere sind die oberen Griffelemente im Wesentlichen in einer zum Querträger parallelen Ebene angeordnet.

Desweiteren ist es bevorzugt, dass die vorzugsweise in einem äußeren Bereich des Querträgers mit diesem verbundenen oberen Griffelemente über ein Zwischenelement miteinander verbunden sind. Das Zwischenelement kann insbesondere zur Anordnung oder Integration eines Tachos oder dergleichen genutzt werden. Vorzugsweise ist das Zwischenelement mit den beiden oberen Griffelementen einstückig ausgebildet.

Die oberen Griffelemente sind erfindungsgemäß jeweils über ein Verbindungselement mit dem Querträger verbunden. Bevorzugt ist hierbei wiederum eine einstückige Ausgestaltung, sowohl der oberen Griffelemente mit den Verbindungselementen als gegebenenfalls auch mit dem Querträger.

Erfindungsgemäß gehen die unteren in Seitenansicht bogenförmig ausgestalteten Griffelemente stufenfrei in die oberen Griffelemente bzw. die Verbindungselemente über. Hierbei ist es besonders bevorzugt, dass der Bogen durch die Verbindungselemente fortgesetzt ist.

In einer bevorzugten Ausführungsform ist der Querträger in montiertem Zustand vorzugsweise im Wesentlichen horizontal angeordnet. Um unterschiedliche Griffpositionen beispielsweise in Abhängigkeit der Sitzposition und der Größe des Fahrradfahrers zu realisieren, kann der Querträger in Vorderansicht gestuft ausgebildet sein. Durch eine entsprechende nach oben gerichtete Stufe auf beiden Seiten des Querträgers kann somit ein Anheben der unteren sowie der oberen Griffposition erzielt werden. Entsprechend kann der Querträger in Vorderansicht auch einen im Wesentlichen V-förmigen Querschnitt aufweisen, wobei je nach Steigung bzw. Winkel der beiden Schenkel eine unterschiedliche Höhe der unteren und oberen Griffelemente realisiert werden kann.

Bei einer weiteren bevorzugten Ausführungsform ist in einem Übergangsbereich zwischen dem Querträger und den oberen Griffelementen bzw. den Verbindungselementen eine Daumenauflage vorgesehen. Diese kann ergonomisch ausgestalt sein. Hier ist zusätzlich zu den drei erwähnten Griffpositionen eine mittlere Griffposition möglich.

Besonders bevorzugt ist es, dass der Querträger derart angeordnet ist, dass er in Seitenansicht im Wesentlichen horizontal in einen horizontal ausgerichteten Vorbau übergeht. Der Vorbau ist vorzugsweise einstückig mit dem Querträger ausgebildet. Desweiteren ist es bevorzugt, dass eine Oberseite des Vorbaus im Wesentlichen stufenfrei zu einer Oberseite des Oberrohrs des Fahrradrahmens angeordnet ist. Hierdurch ist ein neues dynamisches Design realisiert und die Aerodynamik verbessert.

Die Klemmung des Vorbaus am Gabelrohr erfolgt in besonders bevorzugter Ausführungsform in der Ausgestaltung, wie sie in DE 20 2015 002 911 beschrieben ist.

Die seitlichen am Querträger angeordneten unteren Griffelemente können auch nach außen gebogen sein. Hierdurch wird diese Griffposition breiter. Aufgrund der breiteren Abstützung ist eine sicherere Fahrposition erzielt.

Die oberen und/oder die unteren Griffelemente sind in bevorzugter Ausführungsform ergonomisch ausgestaltet und insbesondere an die Hand des Benutzers angepasst. Dies gilt vorzugsweise auch für den Bereich der Daumenauflage. Die Ausgestaltung dieser Bereiche erfolgt somit in besonders bevorzugter Ausführungsform entsprechend den anthropometrischen Maßen der Hände des Fahrers.

Nachfolgend wird die Erfindung anhand bevorzugter Ausführungsformen unter Bezugnahme auf die anliegenden Zeichnungen näher erläutert.

Es zeigen:
- Figur 1: eine schematische Draufsicht einer ersten bevorzugten Ausführungsform der Erfindung,
- Figur 2: eine schematische Vorderansicht des in Figur 1 dargestellten Rennradlenkers,
- Figur 3: eine schematische Seitenansicht des in Figur 1 dargestellten Rennradlenkers,
- Figur 4: eine schematisch perspektivische Ansicht des in Figur 1 dargestellten Rennradlenkers und
- Figur 5: eine schematische Vorderansicht einer zweiten bevorzugten Ausführungsform des erfindungsgemäßen Rennradlenkers.

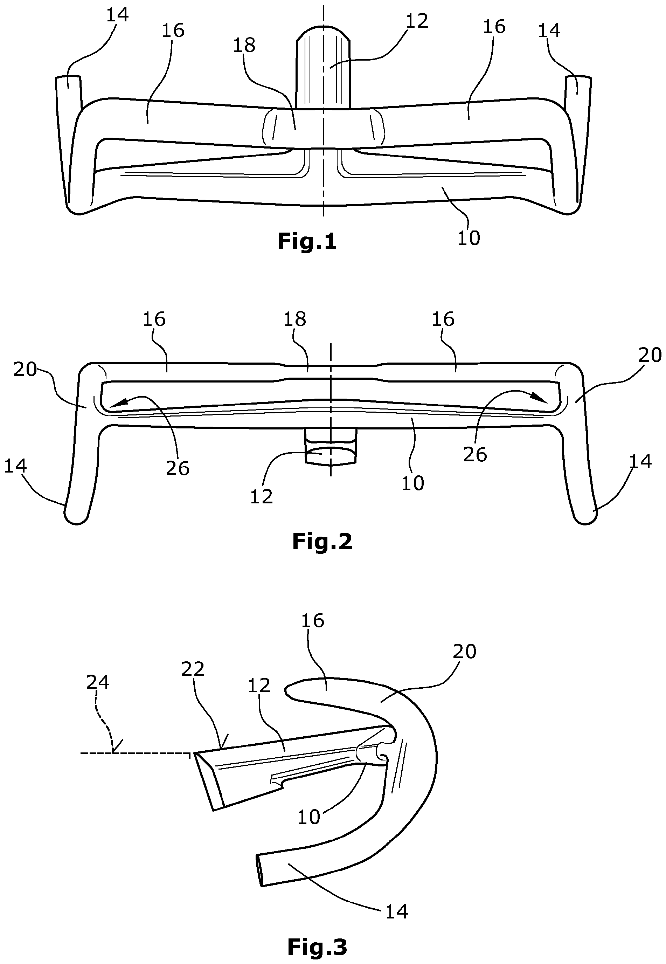

Gemäß der ersten bevorzugten Ausführungsform (Figuren 1 - 4) weist der erfindungsgemäße Fahrradlenker einen Querträger 10 auf. Dieser ist im dargestellten Ausführungsbeispiel einstückig mit dem Lenkervorbau 12 verbunden bzw. ausgebildet. Mit dem Querträger 10 sind an seinen beiden äußeren Enden zwei untere Griffelemente 14 verbunden bzw. einstückig mit diesem ausgebildet. Die unteren Griffelemente weisen in Seitenansicht (Figur 3) eine im Wesentlichen bogenförmige Ausgestaltung auf.

Mit dem Querträger 10 sind ferner zwei obere Griffelemente 16 verbunden, die insbesondere eine höhere Elastizität aufweisen. Die beiden oberen Griffelemente 16 sind im dargestellten Ausführungsbeispiel über ein Zwischenelement 18 miteinander verbunden bzw. einstückig mit diesem und insbesondere auch mit dem Querträger 10 ausgebildet. Die oberen Griffelemente 16 sind über ein Verbindungselement 20 (Figur 3) mit dem Querträger 10 verbunden.

In Seitenansicht ist es hierbei bevorzugt, dass die Verbindungselemente 20 ebenfalls bogenförmig ausgebildet sind. Hierbei ist es bevorzugt, dass der Bogen der unteren Griffelemente 14 in Seitenansicht durch Verbindungselemente 20 fortgesetzt wird.

Im dargestellten Ausführungsbeispiel sind die oberen Griffelemente 16 in Fahrtrichtung weiter hinten angeordnet als der Querträger 10. Im Wesentlichen sind die oberen Griffelemente 16 und die unteren Griffelemente 14 in Seitenansicht übereinander angeordnet. Besonders bevorzugt ist es, dass der Vorbau aufgebaut ist wie in DE 20 2015 002 911 beschrieben. Hierdurch sind eine äußerst aerodynamische Ausgestaltung und insbesondere eine Integration des Vorbaus bzw. der Verbindung zwischen Vorbau und Gabelrohr möglich. In Seitenansicht (Figur 3) ist es daher bevorzugt, dass eine Oberseite 22 des Vorbaus in eine gestrichelt dargestellte Oberseite 24 eines Oberrohrs im wesentlichen stufenfrei übergeht.

Durch den erfindungsgemäßen Fahrradlenker ist mit Hilfe der unteren Griffelemente 14 eine untere Griffposition realisiert, mit der hohe Kräfte und Momente auf den Vorbau übertragen werden können. Die oberen Griffelemente 16 können elastisch ausgestaltet sein, sodass eine insbesondere weniger Ermüdungen hervorrufende obere Griffposition realisiert ist. Zusätzlich ist es bevorzugt, dass in einem Übergangbereich zwischen dem Querträger 10 und dem Verbindungselementen 12 eine Daumenauflage 26 vorgesehen ist. Hierdurch ist eine vierte Griffposition realisiert.

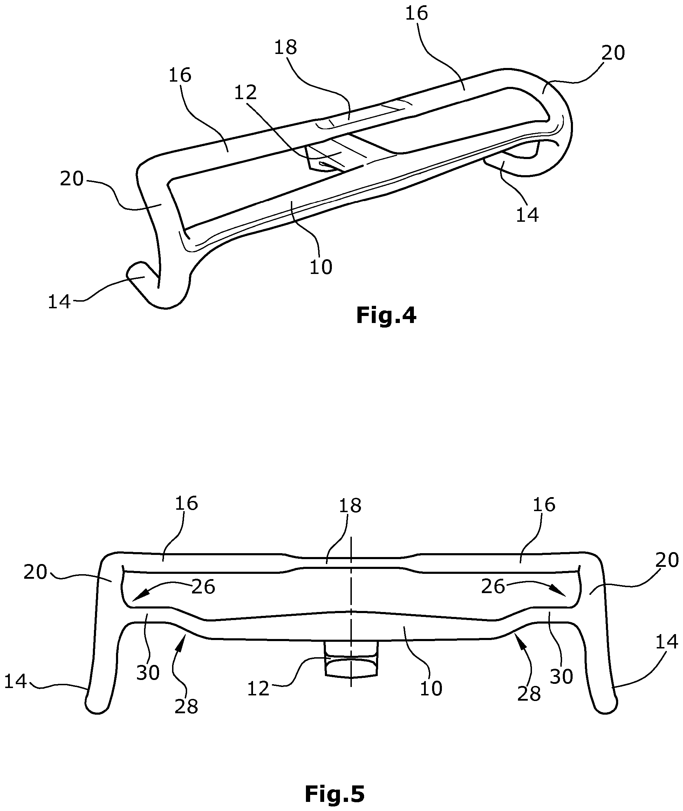

Bei einer weiteren bevorzugten Ausführungsform (Figur 5) sind ähnliche und identische Bauteile mit denselben Bezugszeichen gekennzeichnet.

Der einzige Unterschied dieser Ausführung besteht darin, dass der Querträger 10 einen gestuften Bereich 28 aufweist, sodass ein Bestandteil 30 des Querträgers 10, der mit dem Verbindungselement 20 bzw. dem unteren Griffelement 14 verbunden ist, etwas höher als der Querträger 10 angeordnet ist. Hierdurch ist es möglich die Position des unteren Griffelements 14 sowie des oberen Griffelements 16 zu variieren. Je nach Anforderung können unterschiedliche Stufenbereiche 28 mit unterschiedlichen Steigungen und somit unterschiedlichen Höhendifferenzen realisiert werden. Ebenso ist eine kontinuierliche in Vorderansicht (Figur 5) V-förmige Ausgestaltung des Querträgers 10 möglich, sodass durch Variieren des Winkels unterschiedliche Höhen verwirklicht werden können.

## Patentansprüche

1. Fahrradlenker, insbesondere Rennradlenker, mit
einem mit einem Lenkervorbau (12) verbundenen Querträger (10),
zwei seitliche am Querträger (10) angeordneten unteren, in Seitenansicht bogenförmig ausgebildete Griffelementen (14) und
zwei am Querträger (10) im Wesentlichen parallel zu diesem angeordnete obere Griffelementen (16), die jeweils über ein Verbindungselement (20) mit dem Querträger (10) verbunden sind
**dadurch gekennzeichnet, dass**
die unteren Griffelemente (14) stufenfrei in die Verbindungselemente (20) übergehen.

2. Fahrradlenker nach Anspruch 1, **dadurch gekennzeichnet, dass** die unteren Griffelemente (14) in montiertem Zustand unterhalb des Lenkervorbaus (12) angeordnet sind.

3. Fahrradlenker nach Anspruch 1 oder 2, **dadurch gekennzeichnet, dass** die oberen Griffelemente (16) in montiertem Zustand oberhalb des Lenkervorbaus (12) angeordnet sind.

4. Fahrradlenker nach einem der Ansprüche 1 - 3, **dadurch gekennzeichnet, dass** die oberen Griffelemente (16) nach innen in Richtung des Lenkervorbaus (12) ragen.

5. Fahrradlenker nach einem der Ansprüche 1 - 4, **dadurch gekennzeichnet, dass** die oberen Griffelemente (16) über ein Zwischenelement (14) miteinander verbunden sind, wobei die oberen Griffelemente (16) und das Zwischenelement (18) vorzugsweise einstückig ausgebildet sind.

6. Fahrradlenker nach einem der Ansprüche 1 - 5, **dadurch gekennzeichnet, dass** die unteren Griffelemente (14) stufenfrei in die ebenfalls bogenförmigen Verbindungselemente (20) übergehen.

7. Fahrradlenker nach einem der Ansprüche 1 - 6, **dadurch gekennzeichnet, dass** der Querträger (10) in Vorderansicht zur Ausbildung unterschiedlicher Griffpositionen stufenförmig und/oder V-förmig ist.

8. Fahrradlenker nach einem der Ansprüche 1 - 7, **dadurch gekennzeichnet, dass** in montiertem Zustand eine Oberseite (22) des Vorbaus (12) im Wesentlichen stufenfrei in eine Oberseite (24) eines Oberrohrs eines Fahrradrahmens übergeht.

9. Fahrradlenker nach einem der Ansprüche 1 - 8, **dadurch gekennzeichnet, dass** der Querträger (10) insbesondere im Übergangsbereich zu den oberen Griffelementen (16) bzw. zu den entsprechenden Verbindungselementen (20) eine Daumenauflage (26) aufweist.

10. Fahrradlenker nach einem der Ansprüche 1 - 9, **dadurch gekennzeichnet, dass** die Elastizität der oberen Griffelemente größer ist als die Elastizität der unteren Griffelemente.

## Claims

1. Bicycle handlebar, in particular a racing bicycle handlebar, comprising
a transverse support (10) connected to a handlebar stem (12),
two lower handle elements (14) arranged laterally at the transverse support (10) and formed to be arcuate in side view, and
two upper handle elements (16) arranged at the transverse support (10) such that they are arranged substantially parallel thereto, the upper handle elements each being connected to the transverse support (10) by a connecting element (20),
**characterized in that**
the lower handle elements (14) steplessly transition into the connecting elements (20).

2. Bicycle handlebar of claim 1, **characterized in that**, in the mounted state, the lower handle elements (14) are arranged below the handlebar stem (12).

3. Bicycle handlebar of claim 1 or 2, **characterized in that**, in the mounted state, the upper handle elements (16) are arranged above the handlebar stem (12).

4. Bicycle handlebar of one of claims 1 - 3, **characterized in that** the upper handle elements (16) protrude inward towards the handlebar stem (12).

5. Bicycle handlebar of one of claims 1 - 4, **characterized in that** the upper handle elements (16) are connected to each other via an intermediate element (18), the upper handle elements (16) and the intermediate element (18) preferably being integrally formed.

6. Bicycle handlebar of one of claims 1 - 5, **characterized in that** the lower handle elements (14) steplessly transition into the preferably also arcuate connecting elements (20).

7. Bicycle handlebar of one of claims 1 - 6, **characterized in that** in front view, the transverse support (10) is step-shaped or V-shaped to realize different gripping positions.

8. Bicycle handlebar of one of claims 1 - 7, **characterized in that** in the mounted state, an upper side (22) of the handlebar stem (12) transitions substantially steplessly into an upper side (24) of a bicycle frame.

9. Bicycle handlebar of one of claims 1 - 8, **characterized in that** the transverse support (10) has a thumb rest (26) in particular in the transition region to the upper handle elements (16) or to the corresponding connecting elements (20).

10. Bicycle handlebar of one of claims 1 - 9, **characterized in that** the elasticity of the upper handle elements is higher than the elasticity of the lower handle elements.

## Revendications

1. Guidon de bicyclette, en particulier guidon de vélo de course, doté
d'un support transversal (10) relié à une potence de guidon (12),
de deux éléments de poignée inférieurs (14) disposés latéralement sur le support transversal (10), réalisés en forme d'arc en vue latérale et
de deux éléments de poignée supérieurs (16) disposés sur le support transversal (10) de manière sensiblement parallèle aux précédents, lesquels sont respectivement reliés au support transversal (10) par le biais d'un élément de liaison (20)
**caractérisé en ce que**
les éléments de poignée inférieurs (14) se fondent sans gradin dans les éléments de liaison (20).

2. Guidon de bicyclette selon la revendication 1, **caractérisé en ce que** les éléments de poignée inférieurs (14) sont disposés en-dessous de la potence de guidon (12) dans l'état monté.

3. Guidon de bicyclette selon la revendication 1 ou 2, **caractérisé en ce que** les éléments de poignée supérieurs (16) sont disposés au-dessus de la potence de guidon (12) dans l'état monté.

4. Guidon de bicyclette selon l'une des revendications 1 à 3, **caractérisé en ce que** les éléments de poignée supérieurs (16) font saillie vers l'intérieur en direction de la potence de guidon (12).

5. Guidon de bicyclette selon l'une des revendications 1 à 4, **caractérisé en ce que** les éléments de poignée supérieurs (16) sont reliés l'un à l'autre par le biais d'un élément intermédiaire (14), dans lequel les éléments de poignée supérieurs (16) et l'élément intermédiaire (18) sont de préférence réalisés d'une pièce.

6. Guidon de bicyclette selon l'une des revendications 1 à 5, **caractérisé en ce que** les éléments de poignée inférieurs (14) se fondent sans gradin dans les éléments de liaison (20) également en forme d'arc.

7. Guidon de bicyclette selon l'une des revendications 1 à 6, **caractérisé en ce que** le support transversal (10) est en gradins et/ou en V en vue de devant afin de réaliser différentes positions de poignée.

8. Guidon de bicyclette selon l'une des revendications 1 à 7, **caractérisé en ce que**, dans l'état monté, une face supérieure (22) de la potence (12) se fond sensiblement sans gradin dans une face supérieure (24) d'un tube supérieur d'un cadre de bicyclette.

9. Guidon de bicyclette selon l'une des revendications 1 à 8, **caractérisé en ce que** le support transversal (10) comporte un repose-pouce (26) en particulier dans la zone de transition vers les éléments de poignée supérieurs (16) ou vers les éléments de liaison (20) correspondants.

10. Guidon de bicyclette selon l'une des revendications 1 à 9, **caractérisé en ce que** l'élasticité des éléments de poignée supérieurs est plus élevée que l'élasticité des éléments de poignée inférieurs.
